# EUROPEAN PATENT APPLICATION

(11) **EP 1 143 673 A1**
(43) Date of publication of application: **10.10.2001**
(21) Application number: 00971741.4
(22) Date of filing: 02.11.2000
(51) Int. Cl.: H04L 12/58

(54) **CLIENT SERVER SYSTEM**

(30) Priority: 02.11.1999 JP 31190899
(71) Applicant: NTT DoCoMo, Inc., Tokyo 100-6150 (JP)
(72) Inventor: KURITA, Yasuki, Net Time Corporation, Tokyo 160-0023 (JP)
(74) Representative: Rees, Alexander Ellison
(86) International application number: JP0007720
(87) International publication number: WO0133786

(57) **Abstract**

The client server system is used in a client server system that transfers data on a TCP/IP protocol, and utilizes a protocol that exchanges data by a unit of one object, which includes a header and a body. The header defines the data size of a data portion, and the body stores therein binary data of 8-bit codes such as multimedia data of text, image, audio, or the like. A client such as a mobile phone terminal 3 transmits authentication information simultaneously with exchanging of data. A server 5 attends to filtering with respect to header values of objects based on a formula using normalized expressions that is transmitted from the client, and only those objects which satisfy conditions requested by the client are downloaded. The server 5 generates one object in response to one request from the client by using a program dynamically loaded to a server application, and transmits the object to the client.

## Description

### FIELD OF THE INVENTION

The present invention relates to a communication system that exchanges various types of information between clients and servers connected through a communication network.

### BACKGROUND TECHNOLOGY

Communication services have been conventionally provided to exchange various types of information between mobile computers and servers through a wireless communication network where the mobile computers may be equipped with mobile phones, PHS, or the like.

As a mail transfer protocol on the TCP/IP protocol predominantly used in the Internet, SMTP (Simple Mail Transfer Protocol: RFC821 etc.) is typically used. The SMTP protocol is originally designed for transfer of 7-bit ASCII texts.

In response to the recent market progress of multimedia technology, there has been an increasing demand for use of email for the purpose of transferring video and audio in addition to text information.

As a measure to respond to this demand, transfer of binary data mail has been actually implemented by employing encoders such as "base64" or "uuencode" to convert 8-bit codes into 7-bit codes and by including a mail body by use of the MIME (Multipurpose Internet Mail Extension: RFC2045-2049 etc.) scheme.

In order to receive such mail, POP3 (Post Office Protocol - version 3: RFC1939) or IMAP4 (Internet Message Access Protocol - version 4) is used, which is a protocol for receiving mail that is encoded into 7-bit codes.

With regard to SMTP, some specifications are disclosed, including a format for 8-bit code texts (SMTP Service Extension for 8bit-MIMEtransport: RFC1652) and a protocol for binary data transmission (SMTP Service Extension for Transmission of Large and Binary MIME Messages: RFC1830). The former is principally directed to text information, and the latter is yet in its experimental phase. Neither of them can be used to efficiently implement binary mail.

Further, when 8-bit codes are encoded into 7-bit codes, data size increases 30 to 40 %, resulting in an increased communication time and increased network traffic. It also requires clients to perform encoding/decoding processing, which increases the load on terminals, especially if the terminals are small mobile terminals having relatively small machine power. Moreover, analysis of MIME requires "Boundary" recognition, and, thus, is not efficient.

Accordingly, the object of the present invention is to provide an 8-bit binary data transfer protocol that does not need encoding and decoding at the client end in a client server system, which exchanges binary mail through the TCT/IP protocol.

Further, it is another object of the present invention to provide a mail transfer protocol that is efficient yet does not need "Boundary" recognition that is required in the MIME analysis in a client server system.

In conventional data transfer protocols (including mail) that need authentication, the data transfer procedure is carried out after the authentication procedure, so that at least two procedures are necessary.

On the low-speed communication channel of 9600 bps that is of predominant use in present mobile phones (PDC scheme), an increase in the size of communication data and an increase in the number of sequences by the protocol will result in an increase in communication time.

Accordingly, it is another object of the present invention to provide a protocol that decreases communication sequences in the data exchange procedure of a client server system.

When a user receives mail, a decision has to be made as to whether or not to retrieve the mail. To this end, processing steps are performed to acquire information from a server and to retrieve or erase the entire mail by deciding based on the acquired information.

In this method of deciding whether a user (or client software) retrieves mail based on information acquired from a server, the load on the client side is increased.

Accordingly, it is another object of the present invention to provide a protocol that allows the server side to select (filter) received mail.

### DISCLOSURE OF THE INVENTION

In order to achieve the objects described above, a client server system according to the present invention includes the following means.

A client server system that transfers data on a TCP/IP protocol utilizes a protocol that exchanges data by a unit of one object, which includes a header and a body.

In detail, a client is capable of transmitting authentication information simultaneously with exchanging of data.

Preferably, a server attends to filtering with respect to header values of objects based on a formula using normalized expressions that is transmitted from the client, and only those objects which satisfy conditions requested by the client are downloaded.

To be more specific, the server generates one object in response to one request from the client by using a program dynamically loaded to a server application, and transmits the object to the client.

Preferably, the client is a portable mobile terminal.

In detail, the header defines a data size of a data portion, and the body stores therein binary data.

Preferably, the binary data is 8-bit codes.

To be more specific, the binary data is multimedia data of text, image, audio, or the like.

### BRIEF DESCRIPTION OF THE DRAWINGS

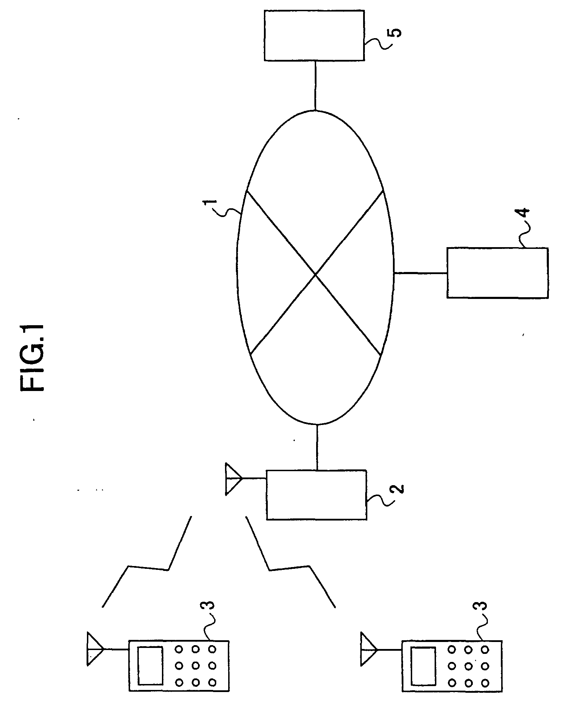

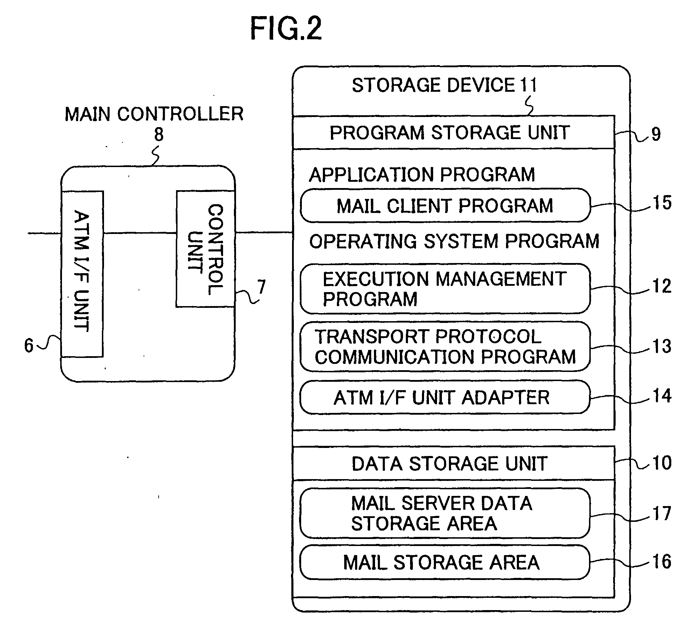

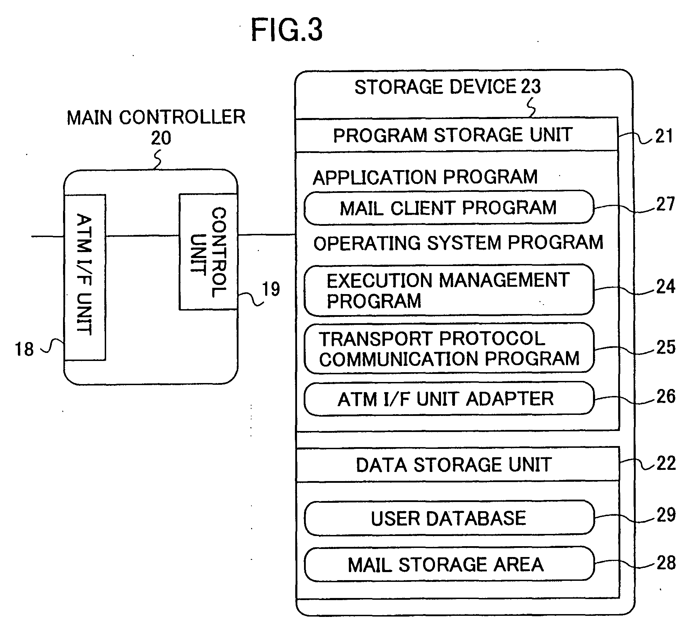

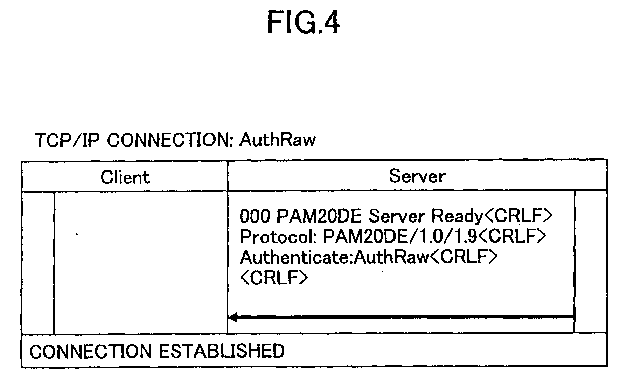

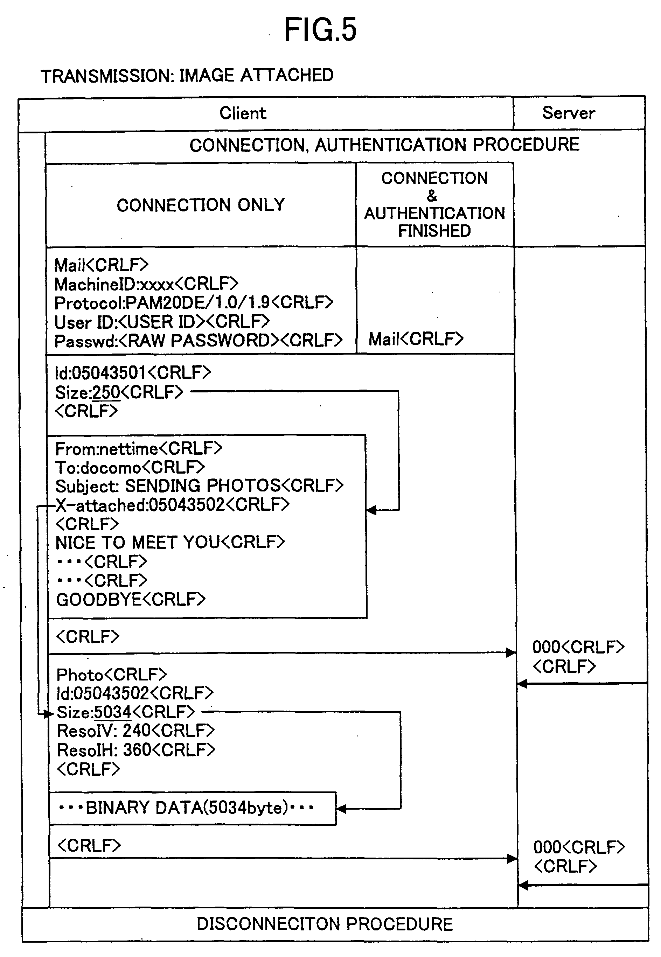

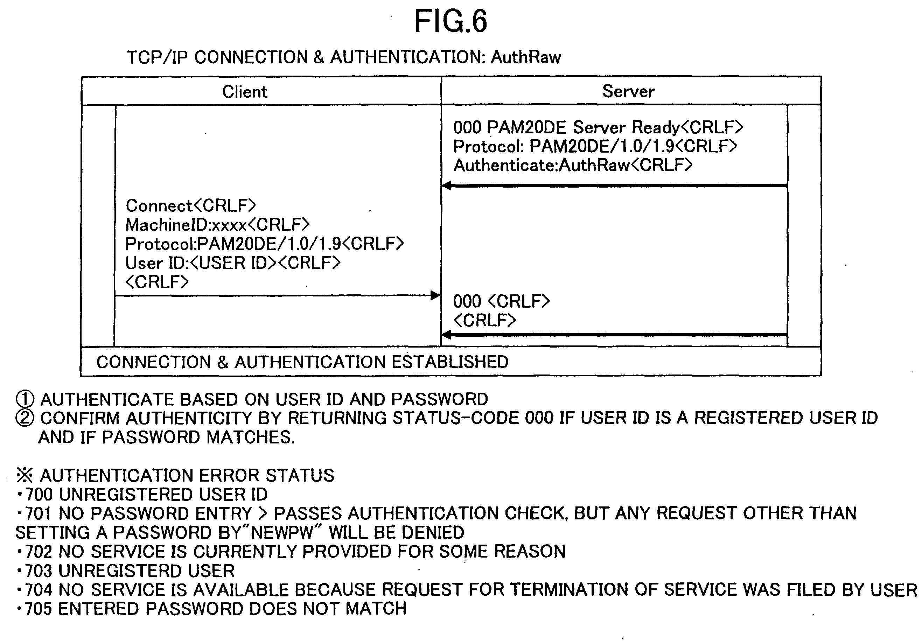

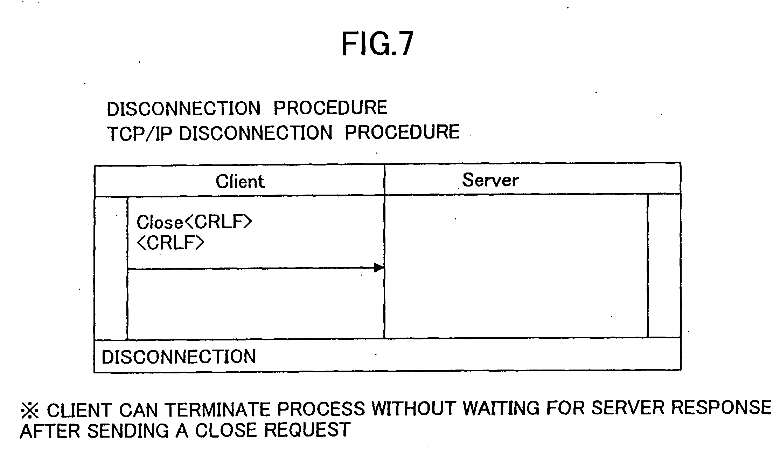

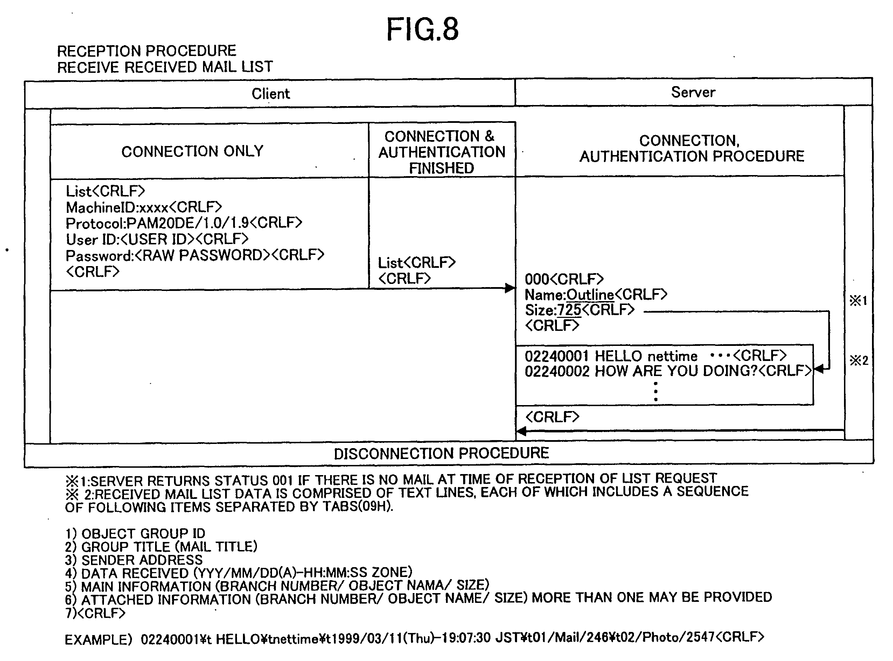

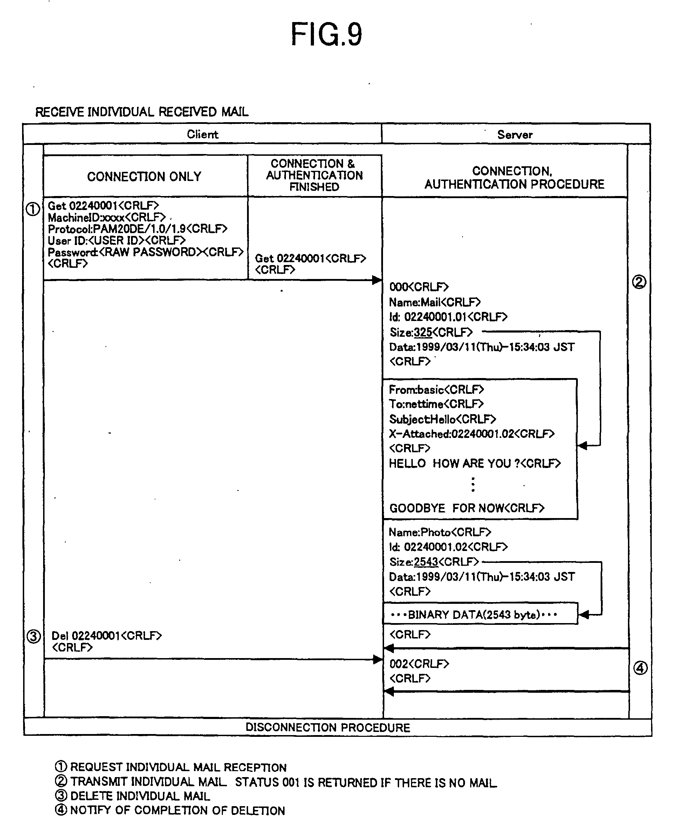

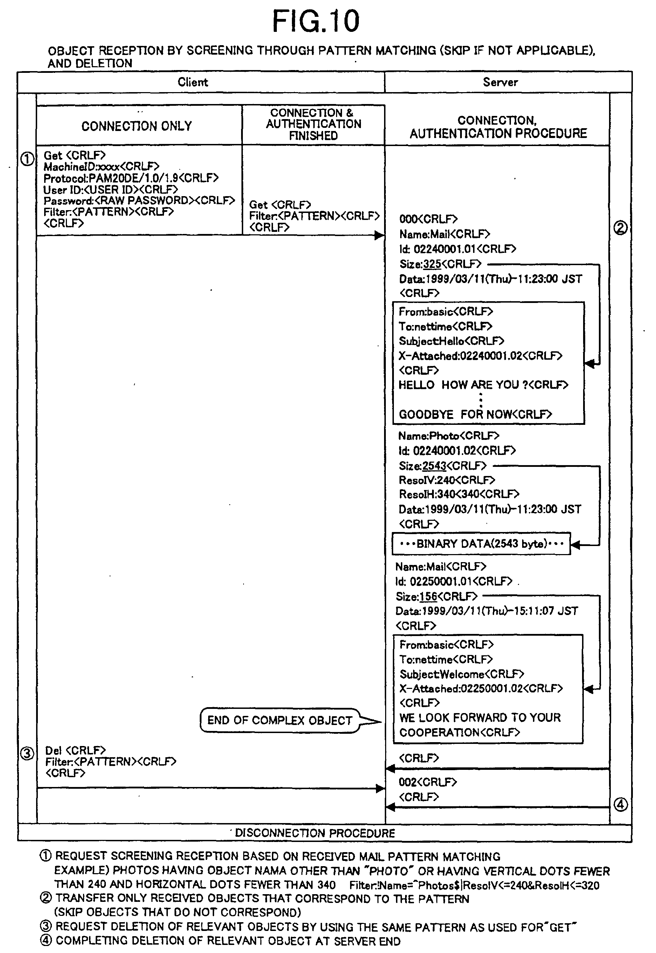

Fig.1 is a drawing of a system configuration showing a client server system according to a fifth embodiment of the present invention. Fig.2 is a drawing of a terminal configuration showing a portion relevant to email exchange functions in the mobile phone terminal of the client server system of Fig.1. Fig.3 is a drawing of a server configuration showing a configuration of a mail server of the client server system shown in Fig.1. Fig.4 is a drawing showing a channel establishment processing procedure between the mobile phone terminal of Fig.1 and the mail server. Fig.5 is a drawing showing a procedure of the process of sending transmission mail from the mobile phone terminal of Fig.1 to the mail server. Fig.6 is a drawing showing an authentication processing procedure between the mobile phone terminal of Fig.1 and the mail server. Fig.7 is a drawing showing a channel disconnection processing procedure between the mobile phone terminal of Fig.1 and the mail server. Fig.8 is a drawing showing a procedure of the process of transmitting a received mail list from the mail server of Fig.1 to the mobile phone terminal. Fig.9 is a drawing showing a procedure of the process of transmitting a portion of received mail from the mail server of Fig.1 to the mobile phone terminal. Fig.10 is a drawing showing a procedure of the process of transmitting all received mail messages from the mail server of Fig.1 to the mobile phone terminal.

### DESCRIPTION OF THE PREFERRED EMBODIMENTS

In the following, preferred embodiments of the present invention will be described with reference to the accompanying drawings.

In PAM²ODE (product name (pam-mode)), which is a new protocol of the present invention, a unit of data transfer is an object that is comprised of a header portion for defining data information and a body portion including data. It is required to define the data size (byte) of the body portion in the header portion. This makes it possible to identify the ending point of the object. Further, it is possible to provide binary data (8-bit data), as it is, in the body, which makes it unnecessary to encode/decode at the client end. As a result, video or audio is transferred from a mobile terminal to a server, by using 8-bit data throughout, without having the data size expanded. When a plurality of objects are concurrently transmitted, an object can be linked immediately following another object, which does not present a trouble such as "Boundary" of the MIME.

In detail, data transferred by PAM²ODE is controlled by the unit of one object, and has a format as follows.
Object = 1 * Object-Header CRLF Object-Body
Object-Header = <comprised of 'tag'':''value' CRLF>
CRLF = end of line code comprised of CR(0x0d) and LF(0x0a)
Object-Body = real data including 8-bit codes

Typical examples of Object-Header are shown in Tablel in the following.

| Object-Header Example Description | Note of Setting |
|---|---|
| Name:Mail | Object Name |
| Id:0208001 | Object-ID |
| Size:3452 | Size (byte) Required of Object-Body |
| Data:1999/07/22(Thu)-10:20:33 JST | Date of Object |
| | Created |
| Rdate:1999/07/22(Thu)-10:20:46 JST | Date of Object |
| | Delivered |

Here, Object-Header can be extended.

### 1. First Embodiment (Acquisition of Format Definition Object List)

As an example of a format of PAM²ODE, the format of a list is defined by setting parameters in a request ObjList. In the format, it is possible to insert a descriptive definition that is a tag name of Object-Header placed between '$' and ':'. The server generates a list by replacing this portion with elements of Object-Header corresponding to each Object.
C: ObjList$Name;
C:
S:000
S:Name:ObjList
S:Size:32
S:
S:Mail
S:Photo
S:Mail
S:Mail
S:Mail
S photo
S:
C:ObjList name = $Name;/id=$Id;
C:
S:000
S:Name:ObjList
S:Size:793
S:
S:name = Mail/id = 02080001.01
S:name = Photo/id = 02080001.02
S:name = Mail/id = 02080002.01
S:name = Mail/id = 02080003.01
S:name = Mail/id = 02080004.01
S:name = Photo/id = 02080004.02
S:

### 2. Second Embodiment (Simultaneous Transmission of Authentication Information and Data Exchange Request Command)

In PAM²ODE, a request message for transmission or reception can be transmitted to a server with authentication information (user ID + password) included therein. Because of this, the server side can send back a response immediately upon the request if the information provides positive authentication. This achieves simultaneous authentication and exchange in one sequence.

### 1) PAM²ODE

S:000PAM20DE Server Ready
S:
C:ObjList $Id;
C:userid:kurita
C:Passwd:********
C:
S:000
S:Name:ObjList
S:Size:256
S:
S:02080001.01
S:02080001.02
S:02080002.01
S:02080003.01
S:
C:Get 02080001.01
C:
S:000
S:<file download>
S:
C:Close
C:
S:000
S:

As a comparison, procedures based on FTP and POP3, which include an authentication procedure and a data exchange procedure separate from each other, will be shown in the following. In this manner, PAM²ODE has fewer communication sequences than FTP and POP3 because the authentication information is attached at the time of a data exchange request.

### 2) FTP

S:220hostname.aaa.bbb.cccFTPserver(Version6.2/ OpenBSD/Linux)ready
C:USER kurita
S:331Password required for kurita.
C:PASS********
S:230 User kurita logged in.
C:SYST
S:215 UNIX Type: L8(Linux)
C:TYPE I
S:200 Type set to I.
C:PORT 210, 157 , 32, xx, x117
S:200 PORT command successful.
C:STOR filename
S:150 Opening BINARY mode data connection for 'filename'
C:<file upload>
S:226 Transfer complete.
C:QUIT
S:221 Goodbye

### 3) POP3

S:+OK POP3 pop.aaa.bbb.ccc v4.37 server ready
C:USER kurita
S:+OK User name accepted, password please
C:PASS********
S:+OK Mailbox open, 1 messages
C:STAT
S:+OK 1 640
C:RETR 1
S:+OK 640 octets
S:<file download>
C:QUIT
S:+OK Sayonara

### 3. Third Embodiment (Selective Download based on Server Side Filtering)

In PAM²ODE, the format of an object that serves as a data unit is utilized to send a server a normalized expression of filtering based on settings of Object-Header, thereby making it possible to download only an object that matches the filter. The sever load is relatively increased compared with the conventional art, but the communication load is reduced so as to maintain the overall performance of the system. Since Object-Header has a format that can be expanded, a normalized expression that is able to follow the expandability may be used as an expression of filtering. In conventional protocols, a client acquires some information (header alone, a list, etc.) from a server, and attends to selective data downloading based on the obtained information. As shown in the following, PAM²ODE does not need such preprocessing.

### Example)

C:Get
C:Filter:Name = Mail$&Size<=1024
C:
S:000
S:<downloading all objects having a size field value less than 1024 and having a Name field value of Object-Header equal to "Mail">
S:

### 4. Fourth Embodiment (Object Oriented Server Application)

A PAM²ODE server generates one object in response to one request, and delegates transaction and response processing to the generated object. Each object is dynamically loaded by a server application as the server receives the request. Because of this, it is possible to extend, add, and abandon requests without modifying base applications of the server.

The server application is subjected to parallel processing, thereby insuring scalability of the number of users (in the order of hundred thousands). Further, the server application is solely responsible for user signup and mail exchange.

The embodiments described above should provide sufficient understanding of the client server system of the claimed invention. Nonetheless, a supplemental description will be provided below in regard to further details of the embodiments.

### 5. Fifth Embodiment (Comprehensive Embodiment)

Fig.1 is a drawing of a system configuration showing a client server system according to a fifth embodiment of the present invention.

This client server system includes an ATM (asynchronous transfer mode) switch network 1, a base station 2 connected to the ATM switch network 1, mobile phone terminals 3 located in the cell site of the base station 2, a base-station search server 4 that stores therein a table showing matches between the base station 2 and the mobile phone terminals 3, and a mail server 5 connected to the ATM switch network 1.

The ATM switch network 1 transfers packets from their sources to destinations by use of the asynchronous transfer mode. This makes it possible to establish a virtual communication channel and place a call between the mobile phone terminals 3, and also provides a basis for the exchange of data such as email by establishing a virtual communication channel between the mobile phone terminals 3 and the mail server 5.

To this end, each mobile phone terminal 3, the mail server 5, and the base station 2 are provided with respective identification numbers for the purpose of distinguishing one from another. Namely, unique addresses are assigned within the ATM switch network 1, and the ATM switch network 1 transfers packets by referring to addresses specified as destinations.

The base station 2 acquires an address of a mobile phone terminal 3 once this mobile phone terminal 3 enters the cell site thereof, and notifies the base-station search server 4 or the like of the acquired address. Upon detecting the move of a mobile phone terminal 3 to outside the boundary of a communication range, the base station 2 informs the base-station search server 4 that covering of this mobile phone terminal 3 is terminated. As a result, the base-station search server 4 has the latest location information list registered therein that specifies matches between the address of each base station 2 and the addresses of mobile phone terminals 3 located in the cell site of the corresponding base station 2.

Further, the base-station search server 4 responds to inquiry from the base station 2, the mail server 5, or the like, and attends to processing such as providing the address of a base station 2 that has an inquired mobile phone terminal 3 in the cell site thereof.

The mail server 5 receives email from each of the mobile phone terminals 3, and transmits email to each of the mobile phone terminal 3.

Fig.2 is a drawing of a terminal configuration showing a portion relevant to email exchange functions in the mobile phone terminal 3 of the client server system.

The mobile phone terminal 3 includes a main controller 8 comprised of an ATM interface unit (ATM I/F unit) 6 and a control unit 7, and further includes a storage device 11 comprised of a program storage unit 9 and a data storage unit 10. The program storage unit 9 stores therein an execution management program 12, a transport protocol communication program 13, an ATM interface unit adapter (ATM I/F unit adapter) 14, operating system programs comprised of programs other than those mentioned above, a mail client program 15, and application programs comprised of programs other than those mentioned above. The data storage unit 10 includes a mail storage area 16 and a mail server data storage area 17.

The ATM I/F unit 6 exchanges data such as email in a packet format by transmitting and receiving radio waves to and from the base station 2.

The control unit 7 executes various types of programs stored in the program storage unit 9, and controls packet exchange or the like by the ATM I/F unit 6.

The mail server data storage area 17 stores various information necessary for accessing the mail server 5 where such information includes the address of the mail server 5 and authentication information such as user IDs and passwords.

The mail storage area 16 stores therein received mail and transmission mail that is created by the mail client program 15.

The ATM I/F unit adapter 14 attends to data communication processing that corresponds to the data link layer of the OSI (Open Systems Interconnection) hierarchical layer model.

The transport protocol communication program 13 is used to carry out data communication processing that corresponds to the network layer and the transport layer of the OSI hierarchical layer model. A typical example of a program of this layer is a communication program based on the TCP/IP protocol.

The execution management program 12 is used to control the starting/finishing of various types of application programs executed by the control unit 7.

The mail client program 15 is executed by the control unit 7 to perform processing of creating and exchanging email. Further, the mail client program 15 is used to perform data communication processing that mainly corresponds to the application layer of the OSI hierarchical layer model.

Fig.3 is a drawing of a server configuration showing a configuration of the mail server 5 in the client server system.

The mail server 5 includes a main controller 20 comprised of an ATM interface unit (ATM I/F unit) 18 and a control unit 19, and further includes a storage device 23 comprised of a program storage unit 21 and a data storage unit 22. The program storage unit 21 stores therein an execution management program 24, a transport protocol communication program 25, an ATM interface unit adapter (ATM I/F unit adapter) 26, operating system programs comprised of programs other than those mentioned above, a mail server program 27, and application programs comprised of programs other than those mentioned above. The data storage unit 22 includes a mail storage area 28 and a user database 29.

The user database 29 stores therein various information necessary for attending to authentication processing or the like of the mobile phone terminals 3 that are accessing the mail server 5. Such registration information includes registered user IDs, registered passwords, and so on corresponding to the addresses of the mobile phone terminals 3.

The mail storage area 28 stores therein email received from the mobile phone terminals 3 by classifying the email according to the mobile phone terminals 3.

The mail server program 27 is executed by the control unit 19, and serves to perform exchange processing of email. Further, the mail server program 27 serves to carry out data communication processing that mainly corresponds to the application layer of the OSI layer hierarchy model.

Configurations other than those described above are identical to those of the mobile phone terminal 3 having the same names, and a description thereof will be omitted.

In the following, a description will be provided in respect of the exchange processing of email based on the client server system as described above.

A description will now be given of the case in which the mobile phone terminal 3 transmits email to the mail server 5. This case takes it for granted that the user database 29 stores therein registered user IDs and registered passwords matched with the addresses of the mobile phone terminals 3. It is also taken for granted that transmission mail is already stored in a mail storage area as a result of a user activation of the mail client program 15 by operating keys or the like of the mobile phone terminal 3.

Under the conditions as described above, the mobile phone terminal 3 enters a communication area covered by the base station 2. In response, the base station 2 notifies the base-station search server 4 and the mail server 5 that the base station 2 now has the mobile phone terminal 3 in the cell site thereof. In response to this notification, the base-station search server 4 matches the address of the mobile phone terminal 3 with the address of the base station 2, and stores them in a list. In this manner, the base-station search server 4 has the latest information about the mobile phone terminal 3 registered therein.

In response to the notice as described above, the control unit 19 of the mail server 5 starts operating based on the mail server program 27, and sends a notice of channel connection as shown in Fig.4 to the mobile phone terminal 3. As a result, the mobile phone terminal 3 can learn that a channel is now established with the mail server 5. In detail, the mail server 5 obtains the address of the base station 2 that has the mobile phone terminal 3 in the cell site thereof by acquiring the address from the base-station search server 4 or the like, and sends the notice of channel connection to the address of the base station 2. In response, the base station 2 sends the notice of channel connection to the mobile phone terminal 3 by referring to the address of the mobile phone terminal 3 that is a destination.

In Fig.4, data provided in the right-hand-side field indicates information that is transmitted from the mail server 5 to the mobile phone terminal 3, and data provided in the left-hand-side field indicates information that transmitted from the mobile phone terminal 3 to the mail server 5. In each field, an arrow indicates that a packet is sent by including data that is shown immediately above the arrow. Namely, in Fig.4, the mail server 5 transmits a packet that includes channel connection acknowledging information (000 PAM2ODE Server Ready), version information (Protocol: PAM2ODE/1.0/1.9) about the mail server program 27 operating on the mail server 5, and information (Authenticate: AuthRaw) indicative of a user authentication scheme. Here, "PAM²ODE" is the name of a protocol that is used to implement the present invention.

When the ATM I/F unit 6 receives the notice of channel connection from the mail server 5, the control unit 7 starts operating based on the mail client program 15, thereby performing the mail transmission processing as shown in Fig.5 with the mail server 5. The transmission mail stored in the mail storage area 16 is divided into pieces of data by the unit of each data type, and is transmitted by the unit of one object that includes a header and a body.

In the example of Fig.5, the transmission mail is divided into an object (main text object) including the main text of the email as a body (main text body) and an object (image object) including the JPEG(Joint Photographic Experts Group)-format image data as a body (image body). The divided mail is then transmitted.

The header (main text header) attached to the main text body includes information unique to the main text body. For example, this information includes information (Mail) indicative of a body type, an address (MachineID: ****) of the mobile phone terminal 3, version information (Protocol: PAM2ODE/1.0/1.9) of the mail client program 15, a user ID (UserID: ****), a password (Passwd: ****), a number (Id: 05043501, hereinafter referred to as an object number) that is unique to the body, and the size of body binary data (= the size of 8 bit codes, Size: 250, by the unit of one byte). The object number has a head portion thereof (i.e., the portion provided before the dot) that is unique to each email message, and has a tail portion thereof (i.e., the portion provided after the dot) that is unique to each data type (object) of the email.

Further, the main text body includes a from-header and a to-header of email, an email header such as a subject, and an object number (the number of an image object in this example, i.e., X-Attached: 05043502) of an object that is transmitted consecutively thereafter, followed by the main text of transmission mail (text data represented by 8-bit code texts).

By the same token, the image header includes information (Photo) indicative of an object type, an object number (Id: 05043502), the size of object binary data (Size: 5034), and the like. Examples of the binary data include 8-bit code text data, image data, multimedia data such as audio, etc. The second and following transmitted objects form the establishment of communication channel will not have the address of the mobile phone terminal 3, the version information of the mail client program 15, and authentication information such as a user ID and a password as they are omitted. Since there is no object transmitted consecutively thereafter, only JPEG data is included.

In this example, transmission is carried out by generating a packet for each object. Each time a packet is received, the mail server 5 returns a reply (000) indicative of proper data reception to the mobile phone terminal 3.

During a period from the notification of channel connection to the transmission of email, the header (i.e., main text header) of the first transmission object of Fig.5 will not have authentication information as it is omitted in the same manner as in the case of the image header if a separate user authentication process is carried out as shown in Fig.6. If such user authentication process is conducted separately from the transmission and reception of data each time the mobile phone terminal 3 is located in the cell site of the base station 2, this creates excessive traffic (exchange of packets). Because of this, it is preferable to perform the transmission and reception of data and the user authentication simultaneously as shown in Fig.5.

When transmission of all the transmission mail messages stored in the mail storage area is completed, the control unit 7 operating based on the mail client program 15 sends the notice of channel disconnection (Close) to the mail server 5 as shown in Fig.7.

Under the conditions that a channel is established before or after the transmission of mail, the mobile phone terminal 3 attends to reception processing of mail received from the mail server 5.

The client-server system according to this embodiment makes it possible to receive a portion of received mail by the unit of one object as shown in Fig.9 after requesting a list as shown in Fig.8 in the same manner as in IMAP4 (Internet Message Access Protocol - Version 4 rev.1). Also, the client-server system makes it possible to receive a portion of received mail by the unit of one object through reception processing to which filter conditions are attached as shown in Fig.10.

In the process of requesting a list shown in Fig.8, the control unit 7 operating based on the mail client program 15 in the mobile phone terminal 3 transmits a command (List) for requesting a received mail list to the mail server 5 together with authentication information as necessary. In the mail server 5, the control unit 19 operating based on the mail client program 27 generates a received mail list, and sends an object (received mail list object) having this list as the body thereof to the mobile phone terminal 3.

The header of the received mail list object includes information (OutLine) indicative of an object type, the size (Size: 725) of object binary data, etc.

In the partial reception processing of received mail as shown in Fig.9, the control unit 7 operates based on the mail client program 15 in accordance with the information given in the received mail list, and transmits an object transmission request command (Get 02240001 (= object number)) to the mail server 5 together with authentication information as necessary.

In the mail server 5, the control unit 19 operating based on the mail server program 27 generates an object that has the data of the specified object number as the body thereof, and sends the generated object to the mobile phone terminal 3. In Fig.9, only the head portion of the object number is specified, so that all the objects that match the head portion of the object number are sent to the mobile phone terminal 3. That is, all the binary data corresponding to a whole received mail message are turned into objects on a data-type-specific basis, and are transmitted to the mobile phone terminal 3.

If no object number is specified in the object transmission request command, data of all the email messages directed to this particular user and stored in the mail storage area 16 of the mail server 5 are sent to the mobile phone terminal 3. This is identical to the received mail acquisition process of POP3 (Post Office Protocol - Version 3).

In the reception processing of received mail with filter conditions attached as shown in Fig.10, the control unit 7 operating based on the mail client program 15 sends an object transmission request command (Get) and a reception filter condition (Filter: <pattern>) to the mail server 5. In the mail server 5, the control unit 19 operating based on the mail server program 27 turns all the email data satisfying the reception filter conditions into objects on a data-type-specific basis, following by sending the objects to the mobile phone terminal 3.

"<pattern>" of the reception filter conditions is a description of conditions regarding the header information of objects where this description is provided by a formula represented by normalized expressions. Such header information includes, for example, object names such as "Mail" and "Photo" indicating data types of data stored in the body as shown in Table 1, and includes a upper limit and a lower limit of the size of a body that indicates the size of data stored in the body.

When the main texts of email having a size smaller than 1024 bytes are to be received, for example, two conditions "Filter:Name=^Mail$&Size<=1024" are described by using a formula based on normalized expressions. The mail server 5 generates objects that satisfy the specified conditions from the mail storage area 28, and sends all the generated objects to the mobile phone terminal 3.

In this manner, the received filter conditions are sent to the mail server 5 together with a transmission request command, so that the mail server 5 can select data in advance. Because of this, there is no need to receive an object list as in the case shown in Fig.8 and Fig.9, and it is possible to selectively receive a required portion of email by using less traffic (i.e., the smaller number of exchanges) than IMAP4 or the like uses.

In the client-server system of this embodiment as described above, email data is stored in the bodies on a data-type-specific basis, and is exchanged together with attached header information that indicates the data size of binary data. This makes it possible to exchange email data while requiring the light processing load and the short data transmission time, without a need to encode binary data used by terminals such as the mobile phone terminals 3 as in the case of conventional TCP/IP email exchange protocols such as SMTP (Simple Mail Transfer Protocol), POP3, IMAP4, etc. Further, the present invention can exchange data under efficient and simple control, and can detect data boundaries at the receiver end without a need for the boundary detection control that detects data boundaries as in the case of POP3 using MIME (Multipurpose Internet Mail Extension) data.

Accordingly, it is possible to exchange various types of data without imposing an undesirable load even when user terminals are the mobile phone terminal 3 or the like that do not have high information processing capacity.

This embodiment has been described with reference to a case in which the mail server program 27 of the mail server 5 serves to exchange email. Such a program can be readily generated by adding programs for generating objects on an email-data-type-specific basis to a mail sever program that operates according to a conventional TCP/IP email exchange protocol.

Since one object is generated to match one request sent from a client terminal such as the mobile phone terminal 3, a conversion to the email exchange protocol of this embodiment can be easily made without modifying the main elements of a mail server application. This can be done by providing a program for generating objects as a shared library and by controlling program operations to hand over processing control from the conventional mail server program to this program of the shared library. In other words, the mail server generates one object in response to one request from the client by using a program dynamically loaded to the server application, and sends the generated object to the client. In this manner, the mail server program 27 of the present invention can be easily made.

The embodiments described above are preferred modes of the present invention, but can be modified in various manners that do not depart from the spirit of the present invention. For example, the present invention can be applicable to a case in which email data is exchanged between client terminals and a mail server over the Internet, rather than over the ATM switch network 1. Further, the present invention may be applied to exchanges of email over the ATM switch network and the Internet.

### INDUSTRIAL APPLICABILITY

In the client server system of the present invention as described above, 8-bit binary data can be transferred without encoding and decoding at the client end. Further, efficient mail transfer is possible that does not require Boundary recognition as in the MIME analysis. Moreover, data exchange between the client and the server can be performed through a small number of communication sequences. Also, it is possible to select (filter) received email messages at the server end for the purpose of sending them to a client.

## Claims

1. A system in a client server system that transfers data on a TCP/IP protocol, utilizing a protocol that exchanges data by a unit of one object, which includes a header and a body.

2. The system as claimed in claim 1, wherein a client is capable of transmitting authentication information simultaneously with exchanging of data.

3. The system as claimed in claim 1, wherein a server attends to filtering with respect to header values of objects based on a formula using normalized expressions that is transmitted from a client, wherein only those objects which satisfy conditions requested by the client are downloaded.

4. The system as claimed in claim 1, wherein a server generates one object in response to one request from a client by using a program dynamically loaded to a server application, and transmits the object to the client.

5. The system as claimed in any one of claims 1 through 4, wherein a client is a portable mobile terminal.

6. The system as claimed in claim 1, wherein said header defines a data size of a data portion, and said body stores therein binary data.

7. The system as claimed in claim 6, wherein said binary data is 8-bit codes.

8. The system as claimed in claim 7, wherein said binary data is multimedia data of text, image, audio, or the like.
